# EUROPEAN PATENT SPECIFICATION

(11) **EP 2 905 945 B1**
(45) Date of publication and mention of the grant of the patent: **19.04.2017**
(21) Application number: 14812397.9
(22) Date of filing: 30.06.2014
(51) Int. Cl.: G06F 21/60

(54) **INTER-TERMINAL IMAGE SHARING METHOD, TERMINAL DEVICE AND COMMUNICATION SYSTEM**
VERFAHREN ZUR TEILUNG VON BILDERN ZWISCHEN ENDGERÄTEN, ENDGERÄT UND KOMMUNIKATIONSSYSTEM
PROCÉDÉ DE PARTAGE D'IMAGES ENTRE DES TERMINAUX, DISPOSITIF TERMINAL, ET SYSTÈME DE COMMUNICATION

(30) Priority: 31.12.2013 CN 201310754796
(43) Date of publication of application: 12.08.2015
(73) Proprietor: Huawei Technologies Co., Ltd., Longgang District Shenzhen, Guangdong 518129 (CN)
(72) Inventor: DONG, Hao, Shenzhen Guangdong 518129 (CN); TANG, Dong, Shenzhen Guangdong 518129 (CN); YANG, Liu, Shenzhen Guangdong 518129 (CN)
(74) Representative: Gill Jennings & Every LLP
(86) International application number: PCT/CN2014/081255
(87) International publication number: WO 2015/100990

(56) References cited:
- EP-A2- 2 323 383
- CN-A- 101 263 469
- CN-A- 102 065 267
- CN-A- 102 724 138
- CN-A- 103 092 524
- CN-A- 103 701 927
- US-A1- 2007 061 399
- US-A1- 2009 091 772
- US-A1- 2012 317 485
- Takahiko Horiuchi ET AL: "Colorization for Monochrome Image with Texture", 13th Color and Imaging Conference, CIC 2005, Scottsdale, Arizona, USA, November 7-11, 2005, 11 November 2005 (2005-11-11), pages 245-250, XP055194204, ISBN: 978-0-89-208259-9 Retrieved from the Internet: URL:http://dippix.tp.chiba-u.jp/papers/CIC 13_Horiuchi.pdf [retrieved on 2015-06-08]
- Anonymous: "Blackboard collaborate - enterprise instant messaging - v4.1 User's Guide", , 12 March 2012 (2012-03-12), XP055194188, Retrieved from the Internet: URL:http://www.blackboard.com/docs/documen tation.htm?DocID=504001PDF [retrieved on 2015-06-08]
- Anonymous: "Screen share used to allow a portion of the screen - Skype Community", community.skype.com, 13 September 2013 (2013-09-13), XP055194121, Retrieved from the Internet: URL:http://community.skype.com/t5/Windows- archive/Screen-share-used-to-allow-a-porti on-of-the-screen/td-p/106556 [retrieved on 2015-06-08]
- KIMBERLY TEE ET AL: "Providing artifact awareness to a distributed group through screen sharing", 4 November 2006 (2006-11-04), COMPUTER SUPPORTED COOPERATIVE WORK, ACM, 2 PENN PLAZA, SUITE 701 NEW YORK NY 10121-0701 USA, PAGE(S) 99 - 108, XP058157026, ISBN: 978-1-59593-249-5

## Description

### TECHNICAL FIELD

The present invention relates to the field of communications technologies, and in particular, to an inter-terminal graphic sharing method, a terminal device, and a communications system.

### BACKGROUND

With popularization of smart mobile terminals and massive increase of functions and applications provided by smart mobile terminals, nowadays users are no longer satisfied with applications of stand-alone terminals. Users have a higher requirement on interaction and information sharing between different terminals and between different users. Therefore, corresponding alliances, such as the Digital Living Network Alliance (Digital Living Network Alliance, DLNA), are established in the industry. This technology allows interconnection and interworking between all electronic devices in a home, including a mobile phone, a television set, a handwriter, a PAD (a tablet), and the like.

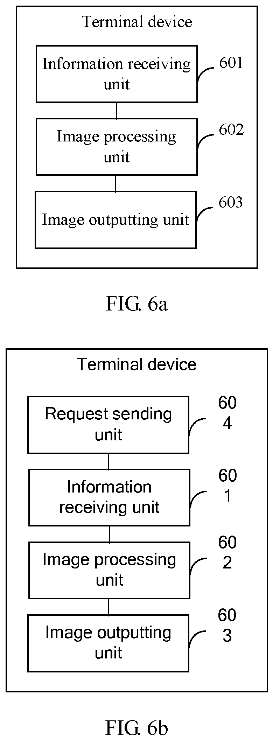

In the prior art, a complete graphic displayed on a screen of a smart terminal can be shared between smart terminals in a local area network environment, where the graphic may be a picture, a video, or the like. However, this method cannot satisfy a personalized requirement of a user or ensure information security. EP2323383 discloses a graphic sharing method which shares graphics across terminals. Document " Providing artifact awareness to a distributed group through screen sharing" Published on 04-11-2006 from Kimberly Tee; Saul Greenberg; Carl Gutwin discloses a method to share part of a screen to protect privacy, in particular specifying how much Detail to Share. Techniques include adjusting the zoom level and distorting the image through image manipulation techniques. The less detail there is visible, the greater the perceived privacy. An audience member is allowed to zoom into details in a shared screen image only up to a maximum zoom level set by the owner. Low zoom limits transform the image into a low resolution image. Alternatively, she can set an increasingly higher zoom limit, so that others can zoom in and view the shared image up to the original resolution. Alternatively or in combination with zoom limits, the owner can mask and distort the image by selecting one of several image masking effects. Current options include image blurring, pixelization, and randomization; others could be added easily. These distortion techniques offer people a high degree of control of image fidelity not only in the thumbnails, but in the larger zoomed-in full views as well. For example, Figure 6 illustrates what people would see when Kim uses the blur effect (6a) or the pixelate effect (6b) at 32% zoom. Both let others roughly see what she is working on while preserving her privacy, because the image does not reveal legible detail.

Embodiments of the present invention provide an inter-terminal graphic sharing method, a terminal device, and a communications system, which can implement that terminals share a part of a graphic displayed on a screen so as to satisfy a personalized requirement of a user or ensure information security.

The embodiments of the present invention disclose the following technical solutions:

According to a first aspect, there is provided an inter-terminal graphic sharing method, wherein a connection is established between a transmit end and a receive end by using a local area network, and the method comprises: determining, by the transmit end, a sharing area on a graphic displayed on a screen of the transmit end; processing, by the transmit end, a graphic in a non-sharing area, so as to mask the graphic in the non-sharing area, wherein the non-sharing area is an area except the sharing area on the graphic displayed on the screen of the transmit end; and sending, by the transmit end, data of a graphic which is displayed on the screen and then processed to the receive end by using the local area network, so that the transmit end and the receive end share a graphic in the sharing area, wherein the processing, by the transmit end, a graphic in a non-sharing area, so as to mask the graphic in the non-sharing area comprises: performing, by the transmit end, monochrome colorization processing on the graphic in the non-sharing area, so as to mask the graphic in the non-sharing area.

With reference to the foregoing first aspect, in a first possible implementation manner, before the determining, by the transmit end, a sharing area on a graphic displayed on a screen of the transmit end, the method further includes:
receiving, by the transmit end, a screen sharing request sent by the receive end; and the determining, by the transmit end, a sharing area on a graphic displayed on a screen of the transmit end includes: in response to the screen sharing request from the receive end, determining, by the transmit end, the sharing area on the graphic displayed on the screen of the transmit end.

According to a second aspect there is provided an inter-terminal graphic sharing method, wherein a connection is established between a transmit end and a receive end by using a local area network, and the method comprises: receiving, by the receive end, data of a graphic and location information of a non-sharing area that are sent by the transmit end by using the local area network, wherein the non-sharing area is an area except a sharing area on the graphic displayed on a screen of the transmit end; processing, by the receive end, a graphic in the non-sharing area on the graphic according to the location information of the non-sharing area, so as to mask the graphic in the non-sharing area; and outputting and displaying, by the receive end, a processed graphic so that the transmit end and the receive end share a graphic in the sharing area, wherein the processing, by the receive end, a graphic in the non-sharing area on the graphic according to the location information of the non-sharing area, so as to mask the graphic in the non-sharing area comprises: performing, by the receive end, monochrome colorization processing on the graphic in the non-sharing area on the graphic according to the location information of the non-sharing area, so as to mask the graphic in the non-sharing area.

With reference to the foregoing second aspect, in a first possible implementation manner, before the receiving, by the receive end, data of a graphic and location information of a non-sharing area that are sent by the transmit end by using the local area network, the method further includes:
sending, by the receive end, a screen sharing request to the transmit end.

According to a third aspect there is provided a terminal device, wherein the terminal device is connected, as a transmit end, to a receive end by using a local area network, and the terminal device comprises: an area determining unit, configured to determine a sharing area on a graphic displayed on a screen of the terminal device; an graphic processing unit, configured to process a graphic in a non-sharing area, so as to mask the graphic in the non-sharing area, wherein the non-sharing area is an area except the sharing area on the graphic displayed on the screen of the terminal device; and an information sending unit, configured to send data of a graphic which is displayed on the screen and then processed to the receive end by using the local area network, so that the terminal device and the receive end share a graphic in the sharing area, wherein the graphic processing unit is specifically configured to perform monochrome colorization processing on the graphic in the non-sharing area, so as to mask the graphic in the non-sharing area.

With reference to the foregoing third aspect, in a first possible implementation manner, the terminal device further includes:
a request receiving unit, configured to receive, before the area determining unit determines the sharing area on the graphic displayed on the screen of the terminal device, a screen sharing request sent by the receive end; where the area determining unit is specifically configured to in response to the screen sharing request from the receive end, determine the sharing area on the graphic displayed on the screen of the terminal device.

According to a fourth aspect, there is provided a terminal device, wherein the terminal device is connected, as a receive end, to a transmit end by using a local area network, and the terminal device comprises: an information receiving unit, configured to receive data of a graphic and location information of a non-sharing area that are sent by the transmit end by using the local area network, wherein the non-sharing area is an area except a sharing area on a graphic displayed on a screen of the transmit end; an graphic processing unit, configured to process a graphic in the non-sharing area on the graphic according to the location information of the non-sharing area, so as to mask the graphic in the non-sharing area; and an graphic outputting unit, configured to output and display a graphic processed by the graphic processing unit so that the transmit end and the terminal device share a graphic in the sharing area, wherein: the graphic processing unit is specifically configured to perform monochrome colorization processing on the graphic in the non-sharing area on the graphic according to the location information of the non-sharing area, so as to mask the graphic in the non-sharing area.

With reference to the foregoing fourth aspect, in a first possible implementation manner, the terminal device further includes:
a request sending unit, configured to send a screen sharing request to the transmit end.

According to a fifth aspect, a communications system is provided, where the communications system includes at least one transmit end and at least one receive end, where the transmit end is connected to the receive end by using a local area network, the transmit end is the terminal device according to the third aspect, or either the first implementation manner of the third aspect or the second implementation manner of the third aspect, or the receive end is the terminal device according to the fourth aspect, or either the first implementation manner of the fourth aspect or the second implementation manner of the fourth aspect, or the receive end is the terminal device according to the fifth aspect, or either the first implementation manner of the fifth aspect or the second implementation manner of the fifth aspect.

According to embodiments of the present invention, a graphic is divided into a sharing area and a non-sharing area, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a schematic diagram of an application scenario of an inter-terminal graphic sharing method according to an embodiment of the present invention;
FIG. 2a is a flowchart of an inter-terminal graphic sharing method according to an embodiment of the present invention;
FIG. 2b is a schematic diagram of graphic sharing between terminals according to an embodiment of the present invention;
FIG. 2c is a flowchart of an inter-terminal graphic sharing method according to an embodiment of the present invention;
FIG. 3a is a flowchart of another inter-terminal graphic sharing method according to an embodiment of the present invention;
FIG. 3b is a flowchart of another inter-terminal graphic sharing method according to an embodiment of the present invention;
FIG. 4a is a schematic structural diagram of a terminal device according to an embodiment of the present invention;
FIG. 4b is a schematic structural diagram of another terminal device according to an embodiment of the present invention;
FIG. 5 is a schematic structural diagram of a terminal device according to an embodiment of the present invention;
FIG. 6a is a schematic structural diagram of a terminal device according to an embodiment of the present invention;
FIG. 6b is a schematic structural diagram of another terminal device according to an embodiment of the present invention;
FIG. 7 is a schematic structural diagram of still another terminal device according to an embodiment of the present invention; and
FIG. 8 is a schematic structural diagram of a terminal device according to an embodiment of the present invention.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

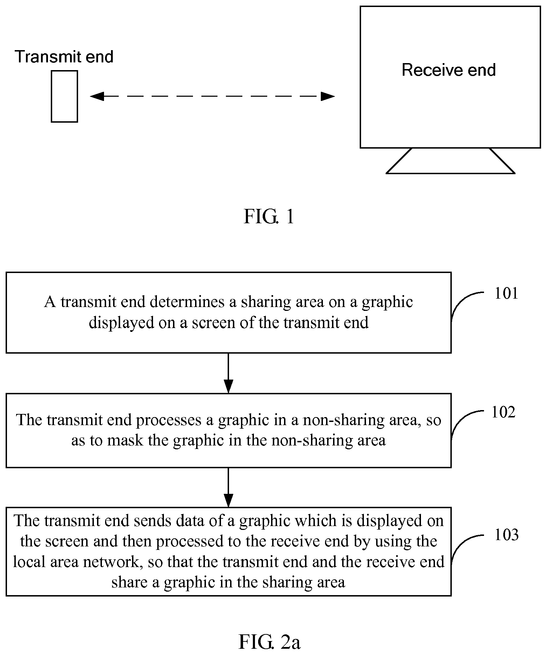

As shown in FIG. 1, FIG. 1 is a schematic diagram of an application scenario in which graphic sharing is performed between terminals in a communications system according to an embodiment of the present invention, where the communications system includes a transmit end and a receive end. A connection is established between the transmit end and the receive end by using a local area network, for example, a connection is established by using Wi-Fi (wireless fidelity). After the connection is established, a screen sharing application is separately started at the transmit end and the receive end, so as to enter a screen sharing mode. In this mode, all operations performed on a screen of the transmit end are considered as operations of selecting a sharing area, and then sharing of information such as a graphic may be performed between the transmit end and the receive end. The transmit end and the receive end may separately be any one of terminals such as a mobile phone, a handwriter, and a PAD separately. The transmit end and the receive end may be terminals of a same type or may be terminals of different types. For example, the transmit end is a mobile phone, and the receive end is a television set. The foregoing graphic may be a single picture, or multiple consecutive graphics in a video, or the like. The foregoing process of establishing a connection between two terminals is not necessarily performed repeatedly each time sharing of information such as a graphic is performed.

As shown in FIG. 2a, a method for sharing a graphic between a transmit end and a receive end may include the following steps:
Step 101: A transmit end determines a sharing area on a graphic displayed on a screen of the transmit end.

It should be noted that before the transmit end determines the sharing area on the graphic displayed on the screen of the transmit end, a connection needs to be established between the transmit end and the receive end by using a local area network.

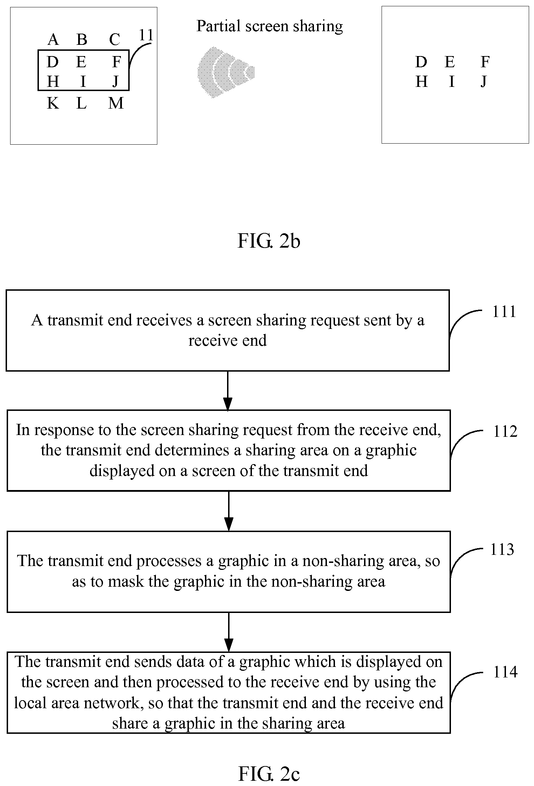

When the receive end shares a part of the graphic on the screen with the transmit end, the transmit end first determines a sharing area, in which graphic sharing needs to be performed, on the graphic displayed on the screen of the transmit end, such as a sharing area 11 on the graphic shown in FIG. 2b. An graphic in the sharing area is a graphic that needs to be shared.

The sharing area may specifically be a sharing area selected by a user on the screen of the transmit end. The sharing area may be preset by the user at the transmit end, for example, the sharing area is preset to be an area of a fixed size at the center of the screen; or the sharing area may also be an area temporarily defined by the user when sharing a part of the graphic is performed. The sharing area may be of any shape, and is not necessarily a rectangle.

When determining the sharing area, the transmit end may read coordinates of the sharing area that are preset by the user, or acquire the sharing area defined by the user on the screen to obtain the coordinates of the sharing area. When the sharing area defined by the user on the screen is acquired, a trace generated by a flick of the user on the screen may be obtained first, and it is identified whether the trace is a closed-loop trace or a quasi-closed-loop trace, and if the trace is a closed-loop trace or a quasi-loop trace, an area surrounded by the closed-loop trace or the quasi-closed-loop trace is used as the sharing area.

Step 102: The transmit end processes a graphic in a non-sharing area, so as to mask the graphic in the non-sharing area.

After the transmit end determines the sharing area, the area except the sharing area on the graphic is the non-sharing area. Subsequently, the transmit end needs to process the graphic in the non-sharing area, so as to mask the graphic in the non-sharing area. It should be understood that, compared with an original graphic displayed on the screen, a processed graphic displayed on the screen has masked the graphic in the non-sharing area.

Specifically, monochrome colorization processing may be performed on the graphic in the non-sharing area. For example, all pixels in the graphic in the non-sharing area are whitened or blackened. For example, as shown in FIG. 2b, the graphic in the non-sharing area except the sharing area 11 is all whitened, so as to mask "A, B, C, K, L, and M" in the non-sharing area on the graphic.

The graphic processing process is performed only in memory and is not displayed on the screen of the transmit end. Certainly, other processing may be performed on the graphic in the non-sharing area, so long as the graphic in the non-sharing area can be masked.

Step 103: The transmit end sends data of a graphic which is displayed on the screen and then processed to the receive end by using the local area network, so that the transmit end and the receive end share a graphic in the sharing area.

The transmit end sends the processed graphic to the receive end by using the local area network, where the graphic is a complete graphic that has been processed and is displayed on the screen of the transmit end, and includes both the graphic in the sharing area and the processed graphic in the non-sharing area.

The receive end performs outputting and displaying according to the received graphic. As shown in FIG. 2b, because the graphic in the non-sharing area is whitened and is consistent with a background color of the entire graphic, only the graphic in the sharing area, that is, "D E F H I J", can be seen by a user on the graphic displayed at the receive end.

When sending the processed graphic, the transmit end may perform coding compression on the data of the processed graphic, and may also perform resolution processing before sending the processed graphic.

According to the embodiment of the present invention, a graphic is divided into a sharing area and a non-sharing area, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

In another embodiment of the present invention, the method for sharing a graphic between a transmit end and a receive end may also be shown in FIG. 2c. A difference of the embodiment from the foregoing embodiment lies in that step 111 is added, in which the transmit end receives a screen sharing request sent by the receive end; and after receiving the request, the transmit end performs step 112, in which in response to the screen sharing request from the receive end, the transmit end determines the sharing area on the graphic displayed on the screen of the transmit end.

Step 112 is similar to the foregoing step 101, step 113 is similar to the foregoing step 102, and step 114 is similar to the foregoing step 103, and details are not described herein again.

In another embodiment of the present invention, one or more graphics may be shared between a transmit end and a receive end. If the transmit end needs to perform partial graphic sharing of multiple pictures (for example, multiple graphics in a video), the foregoing steps may be performed on each graphic to implement partial graphic sharing of each graphic. Sharing areas of all graphics may be the same or may be different.

If the sharing areas of multiple pictures are the same, the transmit end may perform batch processing on the multiple pictures when performing the foregoing steps 102 to 103. For example, when performing step 102, after determining the sharing area, the transmit end may process a graphic in the non-sharing area on each graphic in sequence. When performing step 103, the transmit end sends all processed graphics to the receive end at a time. The foregoing steps may have another variation, which is not limited herein.

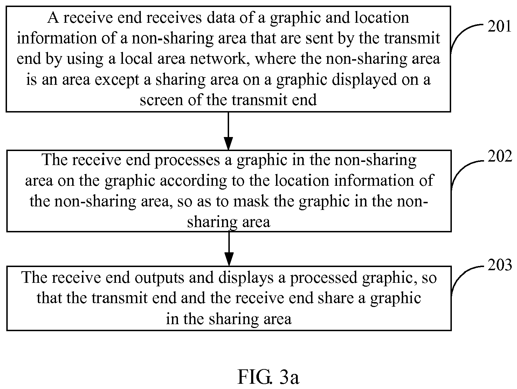

Referring to FIG. 3a, FIG. 3a is a flowchart of another inter-terminal graphic sharing method according to an embodiment of the present invention.

First, a connection is established between a transmit end and a receive end by using a local area network. The method may include the following steps:
Step 201: The receive end receives data of a graphic and location information of a non-sharing area that are sent by the transmit end by using a local area network, where the non-sharing area is an area except a sharing area on a graphic displayed on a screen of the transmit end.

The transmit end first determines the sharing area. The method for determining the sharing area is similar to the foregoing step 101. After the sharing area is determined, the transmit end directly sends a complete graphic displayed on a current screen and the location information of the non-sharing area to the receive end. The location information of the non-sharing area may be a location of coordinates of the non-sharing area on the graphic.

After receiving the foregoing information, the receive end performs step 202.

Step 202: The receive end processes a graphic in the non-sharing area on the graphic according to the location information of the non-sharing area, so as to mask the graphic in the non-sharing area.

The receive end first determines the sharing area and the non-sharing area in the received graphic according to the location information of the non-sharing area. Then, the receive end performs graphic processing on the graphic in the non-sharing area, so as to mask the graphic in the non-sharing area.

Specifically, monochrome colorization processing may be performed on the graphic in the non-sharing area. For example, all pixels in the graphic in the non-sharing area are whitened or blackened. This process is similar to the graphic processing process in the foregoing step 102, and details are not described herein again.

The graphic received by the receive end in the foregoing steps is not displayed on the screen, and the foregoing graphic processing process is performed only in memory. Certainly, other processing may be performed on the graphic in the non-sharing area, so long as the graphic in the non-sharing area can be masked.

Step 203: The receive end outputs and displays a processed graphic, so that the transmit end and the receive end share a graphic in the sharing area.

After processing the graphic, the receive end outputs the processed graphic. In the output graphic, because the graphic in the non-sharing area is masked, for a user, the graphic in the non-sharing area on the original graphic cannot be seen, but the graphic in the sharing area can be seen.

According to the embodiment, a graphic is divided into a sharing area and a non-sharing area, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

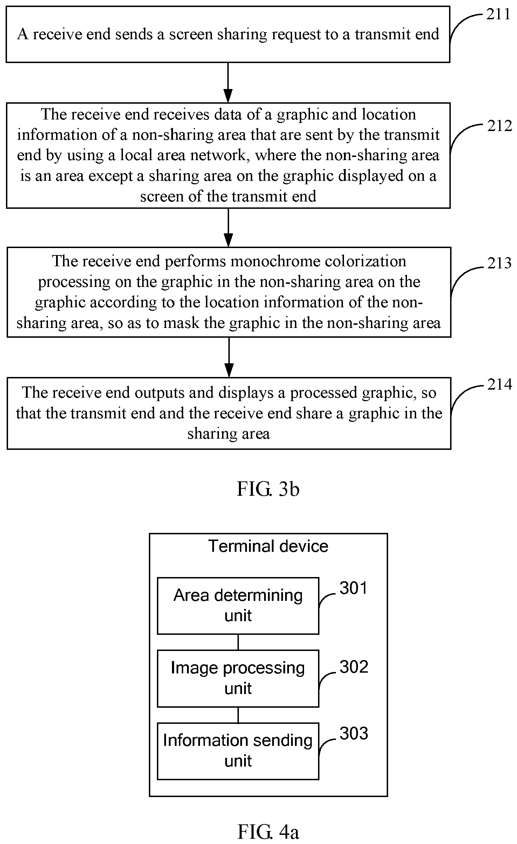

In another embodiment of the present invention, the method for sharing a graphic between a transmit end and a receive end may also be shown in FIG. 3b. A difference of the embodiment from the foregoing embodiment lies in that step 211 is added, in which the receive end sends a screen sharing request to the transmit end; and after receiving the request, the transmit end sends information relevant to sharing, and then the receive end performs step 212.

Step 212 is similar to the foregoing step 201, step 213 is similar to the foregoing step 202, and step 214 is similar to the foregoing step 203, and details are not described herein again.

In another embodiment of the present invention, one or more graphics may be shared between a transmit end and a receive end. If the transmit end needs to perform partial graphic sharing of multiple pictures (for example, multiple graphics in a video), the receive end may perform the foregoing steps on each graphic to implement partial graphic sharing of each graphic. Sharing areas of all graphics may be the same or may be different.

If the sharing areas of multiple pictures are the same, the receive end may perform batch processing on the multiple pictures when performing the foregoing step 202. The foregoing steps may have another variation, which is not limited herein.

The foregoing is description of method embodiments of the present invention, and the following describes an apparatus for implementing the forgoing methods.

Referring to FIG. 4a, FIG. 4a is a schematic structural diagram of a terminal device according to an embodiment of the present invention.

The terminal device is connected, as a transmit end, to a receive end by using a local area network, and the terminal device may include:
an area determining unit 301, configured to determine a sharing area on a graphic displayed on a screen of the terminal device;
an graphic processing unit 302, configured to process a graphic in a non-sharing area, so as to mask the graphic in the non-sharing area, where the non-sharing area is an area except the sharing area on the graphic displayed on the screen of the terminal device; and
an information sending unit 303, configured to send data of a graphic which is displayed on the screen and then processed to the receive end by using the local area network, so that the terminal device and the receive end share a graphic in the sharing area.

The area determining unit 301 determines the sharing area on the graphic displayed on the screen of the terminal device, where the sharing area may be preset by a user on the terminal device. For example, the sharing area is preset to be an area at the center of the screen; or the sharing area may also be an area temporarily defined by the user when partial screen sharing is performed. The graphic processing unit 302 processes the graphic in the non-sharing area, so as to mask the graphic in the non-sharing area, and then sends a processed graphic to the information sending unit 303, and the information sending unit 303 sends the processed graphic to the receive end.

According to the embodiment of the present invention, a graphic is divided into a sharing area and a non-sharing area by using the foregoing units, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

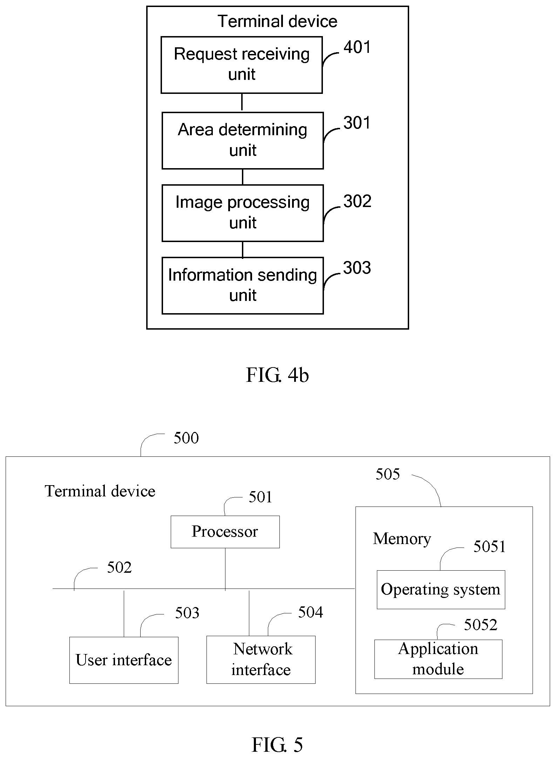

In another embodiment of the present invention, as shown in FIG. 4b, the terminal device may further include:
a request receiving unit 401, configured to receive, before the area determining unit 301 determines the sharing area on the graphic displayed on the screen of the terminal device, a screen sharing request sent by the receive end.

In another embodiment, the graphic processing unit 302 is specifically configured to perform monochrome colorization processing on the graphic in the non-sharing area, so as to mask the graphic in the non-sharing area.

As shown in FIG. 5, an embodiment of the present invention further provides a terminal device 500, where the terminal device 500 may include: at least one processor 501, such as a central processing unit (CPU); at least one network interface 504, such as a physical network adapter, or another user interface 503; a memory 505; and at least one communications bus 502.

The communications bus 502 is configured to implement connection and communication between these components.

The network interface 504 is configured to implement connection and communication between the terminal device and a network. For example, the network interface 504 may be configured to connect devices such as a physical network adapter and/or a physical switch.

The user interface 503 includes a display, and optionally, may further include a keyboard or another clicking device, such as a mouse, a trackball (trackball), a touchpad, or a touch display screen.

The memory 505 may include a high-speed random access memory (RAM, Random Access Memory), or may further include a non-volatile memory (non-volatile memory), such as at least one disk memory. Optionally, the memory 505 may further include at least one storage apparatus located far away from the foregoing processor 501.

In some implementation manners, the memory 505 stores the following elements, executable modules, or data structures, or their subsets, or their extended sets:
an operating system 5051, including various system programs and configured to implement various basic services and handle hardware-based tasks; and
an application module 5052, including various applications and configured to implement various application services.

Specifically, the processor 501 is configured to: determine a sharing area on a graphic displayed on a screen of the terminal device 500; process a graphic in a non-sharing area, so as to mask the graphic in the non-sharing area, where the non-sharing area is an area except the sharing area on the graphic displayed on the screen of the terminal device; and send data of a graphic which is displayed on the screen and then processed to the receive end by using the local area network, so that the terminal device and the receive end share a graphic in the sharing area.

It may be learned that, according to the terminal device provided in the embodiment of the present invention, a graphic is divided into a sharing area and a non-sharing area, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

Referring to FIG. 6a, FIG. 6a is a schematic structural diagram of a terminal device according to an embodiment of the present invention.

The terminal device is connected, as a receive end, to a transmit end by using a local area network, and the terminal device may include:
an information receiving unit 601, configured to receive data of a graphic and location information of a non-sharing area that are sent by the transmit end by using the local area network, where the non-sharing area is an area except a sharing area on a graphic displayed on a screen of the transmit end;
an graphic processing unit 602, configured to process a graphic in the non-sharing area on the graphic according to the location information of the non-sharing area, so as to mask the graphic in the non-sharing area; and
an graphic outputting unit 603, configured to output and display a graphic processed by the graphic processing unit, so that the transmit end and the terminal device share a graphic in the sharing area.

According to the embodiment of the present invention, a graphic is divided into a sharing area and a non-sharing area by using the foregoing units, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

In another embodiment of the present invention, as shown in FIG. 6b, the receive end further includes:
a request sending unit 604, configured to send a screen sharing request to the transmit end.

In another embodiment of the present invention, the graphic processing unit 602 is specifically configured to perform monochrome colorization processing on the graphic in the non-sharing area on the graphic according to the location information of the non-sharing area, so as to mask the graphic in the non-sharing area.

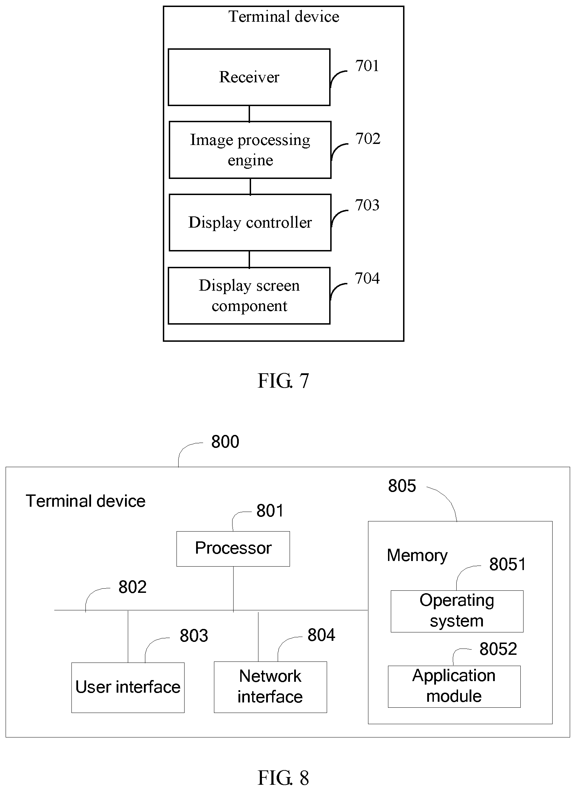

An embodiment of the present invention further provides a terminal device. As shown in FIG. 7, the terminal device is connected, as a receive end, to a transmit end by using a local area network, and the terminal device includes:
a receiver 701, configured to receive data of a graphic and location information of a non-sharing area that are sent by the transmit end by using the local area network, where the non-sharing area is an area except a sharing area on a graphic displayed on a screen of the transmit end;
an graphic processing engine 702, configured to process a graphic in the non-sharing area on the graphic according to the location information of the non-sharing area, so as to mask the graphic in the non-sharing area;
a display controller 703, configured to output a graphic processed by the graphic processing engine 702; and
a display screen component 704, configured to display the graphic output by the display controller, so that the transmit end and the terminal device share a graphic in the sharing area.

In another embodiment of the present invention, the terminal device may further include a sender, configured to send a screen sharing request to the transmit end. In another embodiment of the present invention, the graphic processing engine 702 is specifically configured to perform monochrome colorization processing on the graphic in the non-sharing area on the graphic according to the location information of the non-sharing area.

As shown in FIG. 8, an embodiment of the present invention further provides a terminal device 800, where the terminal device 800 may include: at least one processor 801, such as a CPU; at least one network interface 804, such as a physical network adapter, or another user interface 803; a memory 805; and at least one communications bus 802.

The communications bus 802 is configured to implement connection and communication between these components.

The network interface 804 is configured to implement connection and communication between the terminal device and a network. For example, the network interface 804 may be configured to connect devices such as a physical network adapter and/or a physical switch.

The user interface 803 includes a display, and optionally, may further include a keyboard or another clicking device such as a mouse, a trackball (trackball), a touchpad or a touch display screen.

The memory 805 may include a high-speed random access memory (RAM, Random Access Memory), or may further include a non-volatile memory (non-volatile memory), such as at least one disk memory. Optionally, the memory 805 may further include at least one storage apparatus located far away from the foregoing processor 801.

In some implementation manners, the memory 805 stores the following elements, executable modules, or data structures, or their subsets, or their extended sets:
an operating system 8051, including various system programs and configured to implement various basic services and handle hardware-based tasks; and
an application module 8052, including various applications and configured to implement various application services.

Specifically, the processor 801 is configured to: receive data of a graphic and location information of a non-sharing area that are sent by the transmit end by using the local area network, where the non-sharing area is an area except a sharing area on a graphic displayed on a screen of the transmit end; process a graphic in the non-sharing area on the graphic according to the location information of the non-sharing area, so as to mask the graphic in the non-sharing area; and output and display a processed graphic, so that the transmit end and the terminal device share a graphic in the sharing area.

It may be learned that, in the terminal device provided in the embodiment of the present invention, a graphic is divided into a sharing area and a non-sharing area, and a graphic in the non-sharing area is processed, so as to mask the graphic in the non-sharing area, thereby implementing sharing of a part of a graphic between two terminals in a local area network and satisfying a security requirement and a personalized requirement of a user. In addition, in a local area network environment, a screen can be quickly shared between terminals in real time, and graphic transmission between the terminals is performed without using an operator network and without a requirement for support of a central server, thereby avoiding problems existing during transmission through an operator network, such as heavy traffic, transmission delay, and no support for real-time dynamic sharing.

An embodiment of the present invention further provides a communications system. The communications system may include at least one transmit end and at least one receive end, and the transmit end is connected to the receive end by using a local area network.

The transmit end is configured to: determine a sharing area on a graphic displayed on a screen of the transmit end; and process a graphic in a non-sharing area, so as to mask the graphic in the non-sharing area, where the non-sharing area is an area except the sharing area on the graphic displayed on the screen of the transmit end; and send data of a graphic which is displayed on the screen and then processed to the receive end by using the local area network, so that the transmit end and the receive end share a graphic in the sharing area.

In another embodiment, the transmit end is further configured to receive, before the transmit end determines the sharing area on the graphic displayed on the screen of the transmit end, a screen sharing request sent by the receive end.

The transmit end is specifically configured to perform monochrome colorization processing on the graphic in the non-sharing area, so as to mask the graphic in the non-sharing area.

An embodiment of the present invention further provides a communications system. The communications system may include at least one transmit end and at least one receive end, and the transmit end is connected to the receive end by using a local area network.

The receive end is configured to: receive data of a graphic and location information of a non-sharing area that are sent by the transmit end by using the local area network, where the non-sharing area is an area except a sharing area on a graphic displayed on a screen of the transmit end; process a graphic in the non-sharing area on the graphic according to the location information of the non-sharing area, so as to mask the graphic in the non-sharing area; and output and display the processed graphic so that the transmit end and the receive end share the graphic in the sharing area.

In another embodiment, the receive end is further configured to send a screen sharing request to the transmit end before the receive end receives the data of a graphic and location information of the non-sharing area that are sent by the transmit end by using the local area network.

The receive end is specifically configured to perform monochrome colorization processing on the graphic in the non-sharing area on the graphic according to the location information of the non-sharing area, so as to mask the graphic in the non-sharing area.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An inter-terminal graphic sharing method, wherein a connection is established between a transmit end and a receive end by using a local area network, and the method comprises:
determining, by the transmit end, a sharing area on a graphic displayed on a screen of the transmit end;
processing, by the transmit end, a graphic in a non-sharing area, so as to mask the graphic in the non-sharing area, wherein the non-sharing area is an area except the sharing area on the graphic displayed on the screen of the transmit end; and
sending, by the transmit end, data of a graphic which is displayed on the screen and then processed to the receive end by using the local area network, so that the transmit end and the receive end share a graphic in the sharing area, wherein the processing, by the transmit end, a graphic in a non-sharing area, so as to mask the graphic in the non-sharing area comprises:
performing, by the transmit end, monochrome colorization processing on the graphic in the non-sharing area, so as to mask the graphic in the non-sharing area.

2. The method according to claim 1, wherein before the determining, by the transmit end, a sharing area on a graphic displayed on a screen of the transmit end, the method further comprises:
receiving, by the transmit end, a screen sharing request sent by the receive end; and
the determining, by the transmit end, a sharing area on a graphic displayed on a screen of the transmit end comprises: in response to the screen sharing request from the receive end, determining, by the transmit end, the sharing area on the graphic displayed on the screen of the transmit end.

3. An inter-terminal graphic sharing method, wherein a connection is established between a transmit end and a receive end by using a local area network, and the method comprises:
receiving, by the receive end, data of a graphic and location information of a non-sharing area that are sent by the transmit end by using the local area network, wherein the non-sharing area is an area except a sharing area on the graphic displayed on a screen of the transmit end;
processing, by the receive end, a graphic in the non-sharing area on the graphic according to the location information of the non-sharing area, so as to mask the graphic in the non-sharing area; and
outputting and displaying, by the receive end, a processed graphic so that the transmit end and the receive end share a graphic in the sharing area, wherein the processing, by the receive end, a graphic in the non-sharing area on the graphic according to the location information of the non-sharing area, so as to mask the graphic in the non-sharing area comprises:
performing, by the receive end, monochrome colorization processing on the graphic in the non-sharing area on the graphic according to the location information of the non-sharing area, so as to mask the graphic in the non-sharing area.

4. The method according to claim 3, wherein before the receiving, by the receive end, data of a graphic and location information of a non-sharing area that are sent by the transmit end by using the local area network, the method further comprises:
sending, by the receive end, a screen sharing request to the transmit end.

5. A terminal device, wherein the terminal device is connected, as a transmit end, to a receive end by using a local area network, and the terminal device comprises:
an area determining unit (301), configured to determine a sharing area on a graphic displayed on a screen of the terminal device;
a graphic processing unit (302), configured to process a graphic in a non-sharing area, so as to mask the graphic in the non-sharing area, wherein the non-sharing area is an area except the sharing area on the graphic displayed on the screen of the terminal device; and
an information sending unit (303), configured to send data of a graphic which is displayed on the screen and then processed to the receive end by using the local area network, so that the terminal device and the receive end share a graphic in the sharing area, wherein the graphic processing unit is specifically configured to perform monochrome colorization processing on the graphic in the non-sharing area, so as to mask the graphic in the non-sharing area.

6. The terminal device according to claim 5, further comprising:
a request receiving unit (401), configured to receive, before the area determining unit determines the sharing area on the graphic displayed on the screen of the terminal device, a screen sharing request sent by the receive end, wherein
the area determining unit (301) is specifically configured to in response to the screen sharing request from the receive end, determine the sharing area on the graphic displayed on the screen of the terminal device.

7. A terminal device, wherein the terminal device is connected, as a receive end, to a transmit end by using a local area network, and the terminal device comprises:
an information receiving unit (601), configured to receive data of a graphic and location information of a non-sharing area that are sent by the transmit end by using the local area network, wherein the non-sharing area is an area except a sharing area on a graphic displayed on a screen of the transmit end; a graphic processing unit (602), configured to process a graphic in the non-sharing area on the graphic according to the location information of the non-sharing area, so as to mask the graphic in the non-sharing area; and
a graphic outputting unit (603), configured to output and display a graphic processed by the graphic processing unit so that the transmit end and the terminal device share a graphic in the sharing area, wherein:
the graphic processing unit is specifically configured to perform monochrome colorization processing on the graphic in the non-sharing area on the graphic according to the location information of the non-sharing area, so as to mask the graphic in the non-sharing area.

8. The terminal device according to claim 7, further comprising:
a request sending unit (604), configured to send a screen sharing request to the transmit end.

9. A communications system, wherein the communications system comprises at least one transmit end and at least one receive end, wherein the transmit end is connected to the receive end by using a local area network, the transmit end is the terminal device according to any one of claims 5 or 6, or the receive end is the terminal device according to any one of claims 7 or 8.

## Patentansprüche

1. Verfahren zur gemeinsamen Nutzung einer Graphik zwischen Endgeräten, wobei unter Verwendung eines lokalen Netzes eine Verbindung zwischen einem Sendeende und einem Empfangsende hergestellt wird, und das Verfahren Folgendes umfasst:
Bestimmen eines gemeinsam genutzten Bereichs einer Graphik, die auf einem Bildschirm des Sendeendes angezeigt wird, durch das Sendeende;
Bearbeiten einer Graphik in einem nicht gemeinsam genutzten Bereich durch das Sendeende, um die Graphik in dem nicht gemeinsam genutzten Bereich zu maskieren, wobei der nicht gemeinsam genutzte Bereich einem Bereich ohne den gemeinsam genutzten Bereich der Graphik, die auf dem Bildschirm des Sendeendes angezeigt wird, entspricht; und
Senden von Daten einer Graphik, die auf dem Bildschirm angezeigt und dann bearbeitet wird, durch das Sendeende zu dem Empfangsende unter Verwendung des lokalen Netzes, so dass das Sendeende und das Empfangsende in dem gemeinsam genutzten Bereich eine Graphik gemeinsam nutzen, wobei das Bearbeiten einer Graphik in dem nicht gemeinsam genutzten Bereich durch das Sendeende, um die Graphik in dem nicht gemeinsam genutzten Bereich zu maskieren, Folgendes umfasst:
Durchführen einer monochromen Kolorierungsbearbeitung der Graphik in dem nicht gemeinsam genutzten Bereich durch das Sendeende, um die Graphik in dem nicht gemeinsam genutzten Bereich zu maskieren.

2. Verfahren nach Anspruch 1, wobei das Verfahren vor dem Bestimmen eines gemeinsam genutzten Bereichs einer Graphik, die auf einem Bildschirm des Sendeendes angezeigt wird, durch das Sendeende ferner Folgendes umfasst:
Empfangen einer Anfrage für das gemeinsame Nutzen eines Bildschirms, die von dem Empfangsende gesendet worden ist, durch das Sendeende; und wobei
das Bestimmen eines gemeinsam genutzten Bereichs einer Graphik, die auf einem Bildschirm des Sendeendes angezeigt wird, durch das Sendeende Folgendes umfasst: das Bestimmen des gemeinsam genutzten Bereichs der Graphik, die auf dem Bildschirm des Sendeendes angezeigt wird, durch das Sendeende als Reaktion auf die Anfrage für das gemeinsame Nutzen eines Bildschirms von dem Empfangsende.

3. Verfahren zur gemeinsamen Nutzung einer Graphik zwischen Endgeräten, wobei unter Verwendung eines lokalen Netzes eine Verbindung zwischen einem Sendeende und einem Empfangsende hergestellt wird, und das Verfahren Folgendes umfasst:
Empfangen von Daten einer Graphik und von Ortsinformationen eines nicht gemeinsam genutzten Bereichs, die unter Verwendung des lokalen Netzes durch das Sendeende gesendet werden, durch das Empfangsende, wobei der nicht gemeinsam genutzte Bereich einem Bereich ohne einen gemeinsam genutzten Bereich der Graphik, die auf einem Bildschirm des Sendeendes angezeigt wird, entspricht;
Bearbeiten einer Graphik in dem nicht gemeinsam genutzten Bereich der Graphik durch das Empfangsende entsprechend den Ortsinformationen des nicht gemeinsam genutzten Bereichs, um die Graphik in dem nicht gemeinsam genutzten Bereich zu maskieren; und
Ausgeben und Anzeigen einer bearbeiteten Graphik durch das Empfangsende, so dass das Sendeende und das Empfangsende in dem gemeinsam genutzten Bereich eine Graphik gemeinsam nutzen, wobei das Bearbeiten einer Graphik in dem nicht gemeinsam genutzten Bereich der Graphik entsprechend den Ortsinformationen des nicht gemeinsam genutzten Bereichs durch das Empfangsende, um die Graphik in dem nicht gemeinsam genutzten Bereich zu maskieren, Folgendes umfasst:
Durchführen einer monochromen Kolorierungsbearbeitung der Graphik in dem nicht gemeinsam genutzten Bereich der Graphik entsprechend den Ortsinformationen des nicht gemeinsam genutzten Bereichs durch das Empfangsende, um die Graphik in dem nicht gemeinsam genutzten Bereich zu maskieren.

4. Verfahren nach Anspruch 3, wobei das Verfahren vor dem Empfangen von Daten einer Graphik und von Ortsinformationen eines nicht gemeinsam genutzten Bereichs, die unter Verwendung des lokalen Netzes durch das Sendeende gesendet worden sind, durch das Empfangsende ferner Folgendes umfasst:
Senden einer Anfrage für das gemeinsame Nutzen eines Bildschirms durch das Empfangsende zu dem Sendeende.

5. Endgerätevorrichtung, wobei die Endgerätevorrichtung unter Verwendung eines lokalen Netzes als ein Sendeende mit einem Empfangsende verbunden ist, und die Endgerätevorrichtung Folgendes umfasst:
eine Bereichsbestimmungseinheit (301), die konfiguriert ist, einen gemeinsam genutzten Bereich einer Graphik, die auf einem Bildschirm der Endgerätevorrichtung angezeigt wird, zu bestimmen;
eine Graphikbearbeitungseinheit (302), die konfiguriert ist, eine Graphik in einem nicht gemeinsam genutzten Bereich zu bearbeiten, um die Graphik in dem nicht gemeinsam genutzten Bereich zu maskieren, wobei der nicht gemeinsam genutzte Bereich einem Bereich ohne den gemeinsam genutzten Bereich der Graphik, die auf dem Bildschirm der Endgerätevorrichtung angezeigt wird, entspricht; und
eine Informationssendeeinheit (303), die konfiguriert ist, unter Verwendung des lokalen Netzes Daten einer Graphik, die auf dem Bildschirm angezeigt und anschließend bearbeitet wird, zu dem Empfangsende zu senden, so dass die Endgerätevorrichtung und das Empfangsende in dem gemeinsam genutzten Bereich eine Graphik gemeinsam nutzen, wobei die Graphikbearbeitungseinheit insbesondere konfiguriert ist, monochrome Kolorierungsbearbeitung der Graphik in dem nicht gemeinsam genutzten Bereich durchzuführen, um die Graphik in dem nicht gemeinsam genutzten Bereich zu maskieren.

6. Endgerätevorrichtung nach Anspruch 5, die ferner Folgendes umfasst:
eine Anfrageempfangseinheit (401), die konfiguriert ist, bevor die Bereichsbestimmungseinheit den gemeinsam genutzten Bereich der Graphik, die auf dem Bildschirm der Endgerätevorrichtung angezeigt wird, bestimmt, eine Anfrage für das gemeinsame Nutzen eines Bildschirms, die von dem Empfangsende gesendet worden ist, zu empfangen, wobei
die Bereichsbestimmungseinheit (301) insbesondere konfiguriert ist, den gemeinsam genutzten Bereich der Graphik, die auf dem Bildschirm der Endgerätevorrichtung angezeigt wird, zu bestimmen als Reaktion auf die Anfrage für das gemeinsame Nutzen eines Bildschirms von dem Empfangsende.

7. Endgerätevorrichtung, wobei die Endgerätevorrichtung unter Verwendung eines lokalen Netzes als ein Empfangsende mit einem Sendeende verbunden ist, und die Endgerätevorrichtung Folgendes umfasst:
eine Informationsempfangseinheit (601), die konfiguriert ist, Daten einer Graphik und Ortsinformationen eines nicht gemeinsam genutzten Bereichs zu empfangen, die durch das Sendeende unter Verwendung des lokalen Netzes gesendet worden sind, wobei der nicht gemeinsam genutzte Bereich einem Bereich ohne einen gemeinsam genutzten Bereich einer Graphik, die auf einem Bildschirm des Sendeendes angezeigt wird, entspricht;
eine Graphikbearbeitungseinheit (602), die konfiguriert ist, eine Graphik in dem nicht gemeinsam genutzten Bereich der Graphik entsprechend den Ortsinformationen des nicht gemeinsam genutzten Bereichs zu bearbeiten, um die Graphik in dem nicht gemeinsam genutzten Bereich zu maskieren; und
eine Graphikausgabeeinheit (603), die konfiguriert ist, eine Graphik, die durch die Graphikbearbeitungseinheit bearbeitet worden ist, auszugeben und anzuzeigen, so dass das Sendeende und die Endgerätevorrichtung eine Graphik in dem gemeinsam genutzten Bereich gemeinsam nutzen, wobei:
die Graphikbearbeitungseinheit insbesondere konfiguriert ist, monochrome Kolorierungsbearbeitung der Graphik in dem nicht gemeinsam genutzten Bereich der Graphik entsprechend den Ortsinformationen des nicht gemeinsam genutzten Bereichs durchzuführen, um die Graphik in dem nicht gemeinsam genutzten Bereich zu maskieren.

8. Endgerätevorrichtung nach Anspruch 7, die ferner Folgendes umfasst:
eine Anfragesendeeinheit (604), die konfiguriert ist, eine Anfrage für das gemeinsame Nutzen eines Bildschirms zu dem Sendeende zu senden.

9. Kommunikationssystem, wobei das Kommunikationssystem mindestens ein Sendeende und mindestens ein Empfangsende umfasst, wobei das Sendeende unter Verwendung eines lokalen Netzes mit dem Empfangsende verbunden ist, wobei das Sendeende der Endgerätevorrichtung nach einem der Ansprüche 5 oder 6 entspricht, oder das Empfangsende der Endgerätevorrichtung nach einem der Ansprüche 7 oder 8 entspricht.

## Revendications

1. Procédé de partage de graphiques entre des terminaux, dans lequel une connexion est établie entre une extrémité de transmission et une extrémité de réception en utilisant un réseau local, et le procédé comprend :
déterminer, par l'extrémité de transmission, une zone de partage sur un graphique affiché sur un écran de l'extrémité de transmission ;
traiter, par l'extrémité de transmission, un graphique dans une zone de non-partage, afin de masquer le graphique dans la zone de non-partage, la zone de non-partage étant une zone excepté la zone de partage sur le graphique affiché sur l'écran de l'extrémité de transmission ; et
envoyer, par l'extrémité de transmission, des données d'un graphique qui est affiché sur l'écran, puis traité à l'extrémité de réception en utilisant le réseau local, de sorte que l'extrémité de transmission et l'extrémité de réception partagent un graphique dans la zone de partage, l'étape consistant à traiter, par l'extrémité de transmission, un graphique dans une zone de non-partage, afin de masquer le graphique dans la zone de non-partage comprenant :
exécuter, par l'extrémité de transmission, un traitement de colorisation monochrome sur le graphique dans la zone de non-partage, afin de masquer le graphique dans la zone de non-partage.

2. Procédé selon la revendication 1 dans lequel, avant l'étape consistant à déterminer, par l'extrémité de transmission, une zone de partage sur un graphique affiché sur un écran de l'extrémité de transmission, le procédé comprend en outre :
recevoir, par l'extrémité de transmission, une requête de partage d'écran envoyée par l'extrémité de réception ; et
l'étape consistant à déterminer, par l'extrémité de transmission, une zone de partage sur un graphique affiché sur un écran de l'extrémité de transmission comprend : en réponse à la requête de partage d'écran émise à partir de l'extrémité de réception, déterminer, par l'extrémité de transmission, la zone de partage sur le graphique affiché sur l'écran de l'extrémité de transmission.

3. Procédé de partage de graphiques entre des terminaux, dans lequel une connexion est établie entre une extrémité de transmission et une extrémité de réception en utilisant un réseau local, et le procédé comprend les étapes suivantes :
recevoir, par l'extrémité de réception, des données d'un graphique et des informations d'emplacement d'une zone de non-partage qui sont envoyées par l'extrémité de transmission en utilisant le réseau local, la zone de non-partage étant une zone excepté une zone de partage sur le graphique affiché sur un écran de l'extrémité de transmission ;
traiter, par l'extrémité de réception, un graphique dans la zone de non-partage sur le graphique selon les informations d'emplacement de la zone de non-partage, afin de masquer le graphique dans la zone de non-partage ; et
produire et afficher, par l'extrémité de réception, un graphique traité afin que l'extrémité de transmission et l'extrémité de réception partagent un graphique dans la zone de partage, l'étape consistant à traiter, par l'extrémité de réception, un graphique dans la zone de non-partage sur le graphique selon les informations d'emplacement de la zone de non-partage, afin de masquer le graphique dans la zone de non-partage comprenant :
exécuter, par l'extrémité de réception, un traitement de colorisation monochrome sur le graphique dans la zone de non-partage sur le graphique selon les informations d'emplacement de la zone de non-partage, afin de masquer le graphique dans la zone de non-partage.

4. Procédé selon la revendication 3 dans lequel, avant l'étape consistant à recevoir, par l'extrémité de réception, des données d'un graphique et des informations d'emplacement d'une zone de non-partage qui sont envoyées par l'extrémité de transmission en utilisant le réseau local, le procédé comprend en outre :
envoyer, par l'extrémité de réception, une requête de partage d'écran à l'extrémité de transmission.

5. Dispositif terminal, dans lequel le dispositif terminal est connecté, comme une extrémité de transmission, à une extrémité de réception en utilisant un réseau local, et le dispositif terminal comprend :
une unité de détermination de zone (301), configurée pour déterminer une zone de partage sur un graphique affiché sur un écran du dispositif terminal ;
une unité de traitement graphique (302), configurée pour traiter un graphique dans une zone de non-partage, afin de masquer le graphique dans la zone de non-partage, la zone de non-partage étant une zone excepté la zone de partage sur le graphique affiché sur l'écran du dispositif terminal ; et
une unité d'envoi d'informations (303), configurée pour envoyer des données d'un graphique qui est affiché sur l'écran, puis traité à l'extrémité de réception en utilisant le réseau local, afin que le dispositif terminal et l'extrémité de réception partagent un graphique dans la zone de partage, l'unité de traitement graphique étant configurée spécifiquement pour exécuter un traitement de colorisation monochrome sur le graphique dans la zone de non-partage, afin de masquer le graphique dans la zone de non-partage.

6. Dispositif terminal selon la revendication 5, comprenant en outre :
une unité de réception de requête (401), configurée pour recevoir, avant que l'unité de détermination de zone détermine la zone de partage sur le graphique affiché sur l'écran du dispositif terminal, une requête de partage d'écran envoyée par l'extrémité de réception,
l'unité de détermination de zone (301) étant configurée spécifiquement pour déterminer, en réponse à la requête de partage d'écran émise à partir de l'extrémité de réception, la zone de partage sur le graphique affiché sur l'écran du dispositif terminal.

7. Dispositif terminal, dans lequel le dispositif terminal est connecté, comme une extrémité de réception, à une extrémité de transmission en utilisant un réseau local, et le dispositif terminal comprend :
une unité de réception d'informations (601), configurée pour recevoir des données d'un graphique et des informations d'emplacement d'une zone de non-partage qui sont envoyées par l'extrémité de transmission en utilisant le réseau local, la zone de non-partage étant une zone excepté une zone de partage sur un graphique affiché sur un écran de l'extrémité de transmission ;
une unité de traitement de graphique (602), configurée pour traiter un graphique dans la zone de non-partage sur le graphique selon les informations d'emplacement de la zone de non-partage, afin de masquer le graphique dans la zone de non-partage ; et
une unité de production de graphique (603), configurée pour produire et afficher un graphique traité par l'unité de traitement de graphique afin que l'extrémité de transmission et le dispositif terminal partagent un graphique dans la zone de partage, l'unité de traitement de graphique étant configurée spécifiquement pour exécuter un traitement de colorisation monochrome sur le graphique dans la zone de non-partage sur le graphique selon les informations d'emplacement de la zone de non-partage, afin de masquer le graphique dans la zone de non-partage.

8. Dispositif terminal selon la revendication 7, comprenant en outre :
une unité d'envoi de requête (604), configurée pour envoyer une requête de partage d'écran à l'extrémité de transmission.

9. Système de communication, dans lequel le système de communication comprend au moins une extrémité de transmission et au moins une extrémité de réception, l'extrémité de transmission étant connectée à l'extrémité de réception en utilisant un réseau local, l'extrémité de transmission étant le dispositif terminal selon l'une quelconque des revendications 5 ou 6, ou l'extrémité de réception étant le dispositif terminal selon l'une quelconque des revendications 7 ou 8.
